# EUROPEAN PATENT APPLICATION

(11) **EP 4 746 229 A1**
(43) Date of publication of application: **20.05.2026**
(21) Application number: 24212763.7
(22) Date of filing: 13.11.2024
(51) Int. Cl.: H02J 3/32, H02J 3/48, H02J 3/50, H02J 3/00

(54) **POWER SUPPORTING SYSTEM WITH ENERGY STORAGE SYSTEM**

(71) Applicant: Hitachi Energy Ltd, 8050 Zürich (CH)
(72) Inventor: Bai, Haofeng, 723 48 Västerås (SE); Wang, Feng, 722 10 Västerås (SE); Zhang, Hongyang, 115 24 Stockholm (SE); Abraham Lingan, Aravind Raj, 600125 Chennai (IN); Fan, JianZhong, 771 43 Ludvika (SE); Ingeström, Gunnar, 722 45 Västerås (SE); Wikström, Kent, 723 53 Västerås (SE)
(74) Representative: AWA Sweden AB

(57) **Abstract**

The present disclosure relates to a method of controlling a power supporting system (1) for a power transmission or distribution system, said power supporting system (1) being controllable to: a first power supporting mode (S8) in which said power supporting system (1) is capable of providing active power support and reactive power support, said active power support being provided by means of an energy storage system (20), ESS, having been charged to an energized state, and said reactive power support being provided by means of a voltage source converter (10), VSC, and a second power supporting mode (S5) in which said power supporting system (1) is capable of providing reactive power support by means of said VSC (10), and in which said ESS (10) is in a de-energized state, the method comprising: determining if said power supporting system (1) is operating with normal switching behavior or with emergent switching behavior; during normal switching behavior, controlling the power supporting system (1) so that, when switching mode from said first power supporting mode (S8) to said second power supporting mode (S5), said ESS (20) is discharged by means of operating at least one switch of the VSC (10), and in response to a detection of emergent switching behavior, controlling the power supporting system (1) so that, when switching mode from said first power supporting mode (S8) to said second power supporting mode (S5), said ESS (20) is discharged by means of a protection circuit (40) configured to consume energy of the ESS (20). A control device (30) and a power supporting system (1) is also disclosed.

## Description

### Technical Field

The present disclosure relates to a grid supporting system with an energy storage system. The present disclosure further relates to a method of controlling said grid supporting system, and a control device thereof.

### Background

A STATCOM, or Static Synchronous Compensator, is a device used in power systems to regulate voltage and improve the stability of the electrical grid. It is a type of Flexible AC Transmission System (FACTS) device that provides reactive power compensation, which helps in maintaining the voltage levels within a desired range. Some applications of STATCOMs include wind and solar farms, industrial plants, and transmission and distribution networks.

Some STATCOMs are enhanced with an energy storage system, ESS. These STATCOMs are sometimes referred to as ESTATCOMs (Energy Storage-enhanced Static Synchronous Compensator). This allows for not only providing reactive power but also for injecting or absorbing active power to/from the electrical grid.

ESTATCOMs may be connected to the electrical grid via a YY modular multilevel converter, YY-MMC converter. When the ESS is available, meaning the ESS is connected to the YY-MMC converter and energized to the designed state of charge, SoC, range, the ESTATCOM is capable of providing both active power and reactive power support to the electrical grid. When the ESS is not available, meaning the ESS is disconnected or the SoC is outside an operation range, the ESTACOM is allowed to work in STATCOM mode, supplying only reactive power to the electrical grid.

However, adding energy storage devices (e.g., batteries, supercapacitors) significantly increases the cost compared to a traditional STATCOM. The initial capital cost, as well as the cost of maintenance and eventual replacement of the energy storage system, can be substantial. Moreover, integrating energy storage devices with the power electronics of a STATCOM requires more sophisticated control systems and potentially custom solutions, further increasing costs. Further, complex control algorithms are required to manage both reactive and active power simultaneously. The added complexity of an ESTATCOM can lead to reliability issues, with more components that could potentially fail or require maintenance.

In view of the above, it is of interest to provide a solution which alleviates at least some of the problems of current ESTATCOM solutions.

### Summary

It is an object of the present disclosure to provide an improved solution that alleviates the mentioned drawbacks with present methods and systems. This and other objects which will be implicitly and explicitly detailed in the following disclosure are solved by one or more of the inventions defined in the claims. Additional advantageous embodiments are described in the following.

According to a first aspect of the present disclosure, a method of controlling a power supporting system for a power transmission or distribution system is provided. The power supporting system is controllable to a first power supporting mode in which said power supporting system is capable of providing active power support and reactive power support, said active power support being provided by means of an energy storage system, ESS, having been charged to an energized state, and said reactive power support being provided by means of a voltage source converter, VSC. The power supporting system is controllable to a second power supporting mode in which said power supporting system is capable of providing reactive power support by means of said VSC, and in which said ESS is in a de-energized state. The method comprises: determining if said power supporting system is operating with normal switching behavior or with emergent switching behavior. The method comprises: during normal switching behavior, controlling the power supporting system so that, when switching mode from said first power supporting mode to said second power supporting mode, said ESS is discharged by means of operating at least one switch of the VSC. The method comprises: in response to a detection of emergent switching behavior, controlling the power supporting system so that, when switching mode from said first power supporting mode to said second power supporting mode, said ESS is discharged by means of a protection circuit configured to consume energy of the ESS.

By the above method, switching logic for operational modes is advantageously enhanced. This effect can be illustrated as follows. As a non-limiting example, a switch of the VSC may be instructed to switch between an ON-state (conductive state) and an OFF-state (non-conductive state) according to a normal switching behavior. However, due to various factors (like thermal effects, component aging, or cumulative system stress), the switch's timing performance may be impacted so that the switch begins to operate with a switching delay that worsen progressively over time. As a result, this switching delay may lead to emergent switching behavior (which may include increasingly unintended or unexpected or erratic switching behavior), thus compromising system reliability and potentially leading to failures if the delays become too significant. By implementing switching logic for operational modes that specifically handles situations of emergent switching behavior, the switching logic is indeed enhanced. The enhanced switching logic increases the reliability of switching performances of the switch, i.e., that the ON/OFF transitions of the switch during normal switching behavior aligns with intended operational timings. This predictability simplifies the calibration process of the power supporting system, thereby facilitating the power supporting system to be calibrated so as to meet desired performance and functionality. It should be understood that the power supporting system may comprise many more switches than one switch as in the non-limiting example described above. Thus, the switching logic of the power supporting system is increasingly more complex with more switches, and the enhanced switching logic is particularly advantageous for larger scale power supporting system that may incorporate much more than one switch.

In addition, it may further reduce time to locate a failure within the power supporting system, thereby reducing maintenance time and increasing availability of the power supporting system to provide active/reactive power support.

In the context of the present disclosure, normal switching behavior refers to a situation or behavior in which all switches of the power supporting system, and in particular all switches of the voltage source converter, operate according to an intended switching operation. For instance, if it is determined that a switch is to be open for a first time interval and closed for a second time interval, then said switch operates according to intended switching operation if said switch indeed is open for said first time interval and closed for said second time interval.

In the context of the present disclosure, emergent switching behavior refers to a situation or behavior in which one or more switches of the power supporting system, and in particular switches of the voltage source converter, operate according to an unintended (or unexpected) switching operation. For instance, if it is determined that a switch is to be open for a first time interval and closed for a second time interval, then said switch operates according to unintended switching operation if said switch fails to be open for said first time interval and/or fails to be closed for said second time interval.

In the context of the present disclosure, active power support includes one or more of the following: controlling power flow, frequency regulation, interconnection. By controlling power flow, the power supporting system may precisely control the amount of active power transmitted between systems, which may be crucial for load balancing, especially during demand peaks or generation shortfalls in one part of the power transmission or distribution system. By frequency regulation, the power supporting system may stabilize a frequency of the power transmission or distribution system by adjusting the power flow in response to frequency deviations in the connected power transmission or distribution system. By interconnection, the power supporting system may allow for the transfer of active power between asynchronously connected power transmission or distribution system.

In the context of the present disclosure, reactive power support includes one or more of the following: AC side compensation, voltage stability, or dynamic compensation. By AC side compensation, the power supporting system provides reactive power support to the AC grid by means of one or more synchronous condensers or static VAR compensators. By voltage stability, the power supporting system may stabilize voltage levels in the connected power transmission or distribution system, thus preventing issues like voltage collapse, especially during disturbances or high load conditions. By dynamic compensation, the power supporting system may dynamically adjust reactive power to enhance voltage control.

In the context of the present disclosure, power transmission system and power distribution system refer to different stages in the process of delivering electricity from power plants to end users. Power transmission systems transport power at high voltages from power plants to substations. Power distribution systems deliver power at lower voltages from substations to end users. As a non-limiting example, high voltage levels include 100 kV or higher. As a non-limiting example, low voltage levels include 1 kV or lower.

The power supporting system may, when operating so as to be capable of providing active power support and reactive power support, be said to operate in ESTATCOM mode. Further, the power supporting system may, when operating so as to be capable of providing only reactive power support, be said to operate in STATCOM mode.

According to one embodiment, said power supporting system is controllable between a plurality of operational modes, wherein said first power supporting mode and said second power supporting mode are included in said plurality of operational modes, said plurality of operational modes further including one or more of the following: a power neutral mode in which the power supporting system does not provide active power support nor reactive power support and in which the ESS is in a de-energized state, and in which said at least one switch of the VSC is initialized; a charging mode in which the ESS is being charged to an energized state; an active discharging mode in which the ESS is being discharged to said de-energized state by means of said VSC, the method comprising: during normal switching behavior, controlling the power supporting system according to a normal operation sequence. Said normal operation sequence includes at least one or more of the following: switching from said neutral mode to said charging mode; switching from said charging mode to said first power supporting mode; switching from said first power supporting mode to said active discharging mode; switching from said active discharging mode to said neutral mode; switching from said neutral mode to said second power supporting mode; switching from said second power supporting mode to said neutral mode. The normal operation sequence may include other steps detailed later in the disclosure.

In said power neutral mode, the VSC is connected to said power transmission or distribution system, and is energized, but no switch of the VSC is being switched. Further, in said power neutral mode, the ESS is in a de-energized state, i.e., voltage of the ESS is zero or close to it, such as having decreased by at 95% or more from a nominal voltage taken as the average of a target operational range of the ESS.

In said charging mode, the VSC is connected to the grid and energized, and one or more switches of the VSC are being switched as needed. However, in this state, the system does not provide active power support since the active power is used for the purpose of charging the ESS. On the ESS side, the voltage is not zero any more (or close to it), but it is not in the operation range for service yet.

In said active discharging mode, the VSC is connected to the grid, energized and one or more switches of the VSC are switching as needed. However, in this state, the system is not providing active power support as the active power is used for discharging the ESS. On the ESS side, the voltage is no longer in the target operation range anymore, and it is not zero.

According to one embodiment, said plurality of operational modes further includes: a third power supporting mode in which the power supporting system is capable of providing reactive power support and in which the ESS is being discharged to said de-energized state by means of said protection circuit, wherein said normal operation sequence further includes: switching from said third power supporting mode to said second power supporting mode.

According to one embodiment, the method further comprises: in response to an emergent switching behavior, controlling the power supporting system according to an emergent operation sequence including at least one or more of the following: switching from said active discharging mode to said third power supporting mode; switching from said charging mode to said third power supporting mode; and switching from said first power supporting mode to said third power supporting mode. The emergent operation sequence may include other steps detailed later in the disclosure.

According to one embodiment, the plurality of operational modes further includes: a first disconnected mode in which the power supporting system is disconnected from the power transmission or distribution system and the ESS is in said de-energized state; a connected mode in which the power supporting system is connected to the power transmission or distribution system, wherein said normal operation sequence further includes: switching from said second power supporting mode to said first disconnected mode, switching from said first disconnected mode to said connected mode, switching from said connected mode to said second power supporting mode.

In said first disconnected mode, the VSC is energized, but it is disconnected from the power transmission or distribution system (e.g., by means of at least one AC breaker and/or at least one disconnector open). On the ESS side, the ESS is in a de-energized state.

In said connected mode, the VSC is de-energized and maintenance groundings are removed, thereby no longer promoting safe maintenance. In addition, safeguard measures may be applied, such as preventing access to the VSC so that personnel cannot access the VSC. Thus, the VSC can safely be energized. One the ESS side, the ESS may or may not be ready for energization depending on configuration.

According to one embodiment, said emergent operation sequence further includes: switching from said second power supporting mode to said first disconnected mode.

According to one embodiment, the plurality of operational modes further includes: a maintenance mode in which the power supporting system is at least partially shut-down so as to promote safe maintenance; wherein the normal operation sequence further includes: switching from said maintenance mode to said connected mode; and/or switching from said connected mode to said maintenance mode.

In said maintenance mode, the VSC and the ESS are de-energized, grounded, and access is allowed for personnel to carry out maintenance.

According to one embodiment, the plurality of operational modes further includes: an initialization mode in which the ESS is initialized, wherein the normal operation sequence further includes: switching from said connected mode to said initialization mode; switching from said initialization mode to said connected mode; switching from said initialization mode to said neutral mode; switching from said neutral mode to said initialization mode; and/or switching from said initialization mode to said second power supporting mode.

In said initialization mode, the VSC and the ESS are de-energized, and maintenance groundings are removed. In addition, safeguard measures may be applied, such as preventing access to the VSC and/or the ESS so that personnel cannot access the VSC or the ESS respectively. Thus, the VSC and the ESS can be safely energized via the power transmission or distribution system.

According to one embodiment, the plurality of operational modes further includes: a second disconnected mode in which the power supporting system is disconnected from the power transmission or distribution system and in which the ESS is being discharged to said de-energized state by means of said protection circuit, wherein the normal operation sequence includes: switching from said third power supporting mode to said second disconnected mode; and/or switching from said second disconnected mode to said first disconnected mode.

In said second disconnected mode, the VSC is energized, but disconnected from the power transmission or distribution system (e.g., by means of at least one AC breaker and/or at least one disconnector open). On the ESS side, the ESS is being discharged via said protection circuit, meaning it is not in the de-energized state yet.

According to one embodiment, said emergent operation sequence includes one or more of: switching from said third power supporting mode to said second disconnected mode; switching from said active discharging mode to said second disconnected mode; switching from said charging mode to said second disconnected mode; and/or switching from said first power supporting mode to said second disconnected mode.

According to a second aspect of the invention, a control device is provided. The control device is configured to perform the method according to the first aspect or any of the embodiments thereof.

According to a third aspect of the invention, a power supporting system for a power transmission or distribution system is provided. The power supporting system is configured to be controllable to: a first power supporting mode in which said power supporting system is capable of providing active power support and reactive power support, said active power support being provided by means of an energy storage system, ESS, having been charged to an energized state, and said reactive power support being provided by means of a voltage source converter, VSC. The power supporting system is configured to be controllable to: a second power supporting mode in which said power supporting system is capable of providing reactive power support by means of said VSC, and in which said ESS is in a de-energized state. The power supporting system is configured to operate with normal switching behavior or with emergent switching behavior. The power supporting system is configured to, during normal switching behavior, when switching mode from said first power supporting mode to said second power supporting mode, discharge said ESS by means of operating at least one switch of the VSC, and, in response to a detection of emergent switching behavior, when switching mode from said first power supporting mode to said second power supporting mode, discharge said ESS by means of a protection circuit configured to consume energy of the ESS.

According to one embodiment, at least one switch of said at least one switch of the VSC is a semiconductor switch, wherein optionally said semiconductor switch is one of an insulated-gate bipolar transistor (IGBT), a metal-oxide-semiconductor field effect transistor (MOSFET), or an Integrated Gate-Commutated Thyristor.

According to one embodiment, the protection circuit comprises at least one resistor.

According to one embodiment, the power supporting system comprises a control device according to the second aspect or any of the embodiments thereof.

According to a fourth aspect, a computer program is provided. The computer program comprises instructions which, when the program is executed by a computer, cause the computer to carry out the method according to the first aspect or any of the embodiments thereof.

According to a fifth aspect, a computer-readable storage medium is provided. The computer-readable storage medium comprises instructions which, when executed by a computer, cause the computer to carry out the method according to the first aspect or any of the embodiments thereof.

Effects and features of the second, third, fourth, fifth and sixth aspects are largely analogous to those described above in connection with the first aspect. Embodiments mentioned in relation to the first aspect are largely compatible with the second, third, fourth, fifth and sixth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the present disclosure and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of the Drawings

The invention will in the following be described in more detail with reference to the enclosed drawings, wherein:
Fig. 1 illustrates a schematic view of a power supporting system according to an embodiment;
Fig. 2 illustrates a schematic view of an energy storage cell of the power supporting system according to an embodiment;
Figs. 3a-3b respectively illustrate schematic views of two different types of an energy storage cell of the power supporting system;
Fig. 4 illustrates a flow chart of a method of controlling a power supporting system in accordance with an embodiment;
Fig. 5 illustrates a flow chart of a part of a method of controlling a power supporting system in accordance with an embodiment.

### Description of Embodiments

Hereinafter, the principle of the method, system, control device, computer program or computer-readable storage medium according to the present disclosure will be described with reference to illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached figures. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

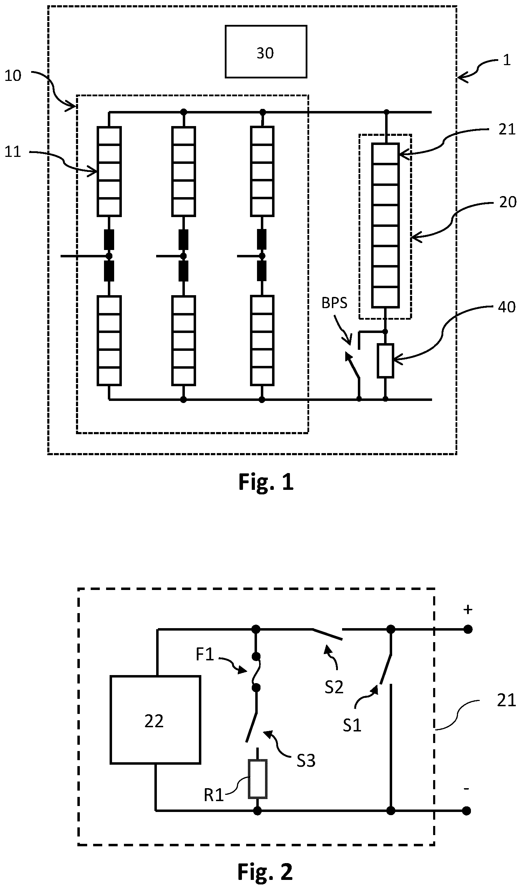

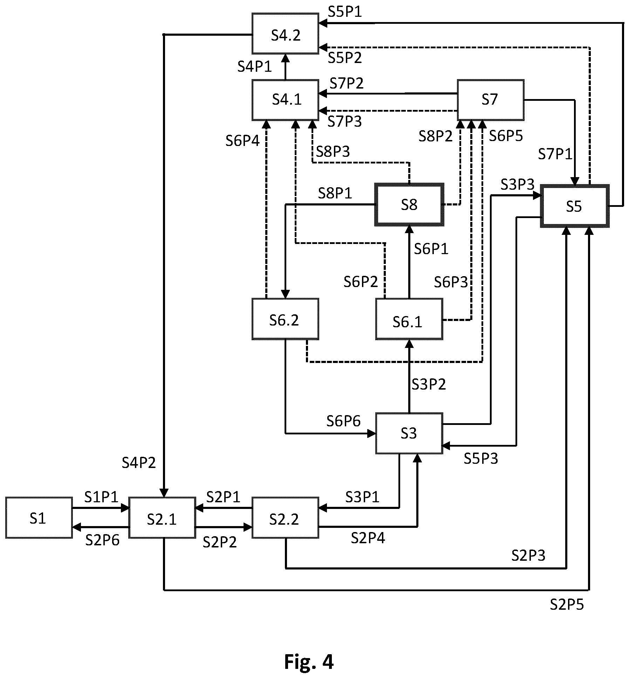

Fig. 1 illustrates a schematic view of a power supporting system 1 according to one embodiment. The power supporting system 1 comprises a voltage source converter (VSC) 10 and an energy storage system (ESS) 20. The cells 11 of the VSC 10 are arranged in respective arms as a plurality of series connected cells 11. As a non-limiting example, the VSC may comprise three arms, each arm comprising a plurality of series connected cells 11. The cells 11 of an arm of the VSC 10 may however be arranged as a plurality of series- and parallel connected cells 11. The cells 11 of the ESS 20 are arranged in at least one string as a plurality of series connected cells 11. The cells 21 of the ESS 20 are arranged in an arm as a plurality of series connected cells 21. The cells 21 of said string of the ESS 20 may however be arranged as a plurality of series- and parallel connected cells 21. The ESS 20 may further comprise a bypass switch BPS in parallel with a resistor 40. The resistor 40 may be series connected with each string of said at least one string of the ESS 20. As a non-limiting example, the power supporting system 1 may further comprise a control device 30 for performing a method of controlling the power supporting system 1. Said method is described below with reference to Fig. 4.

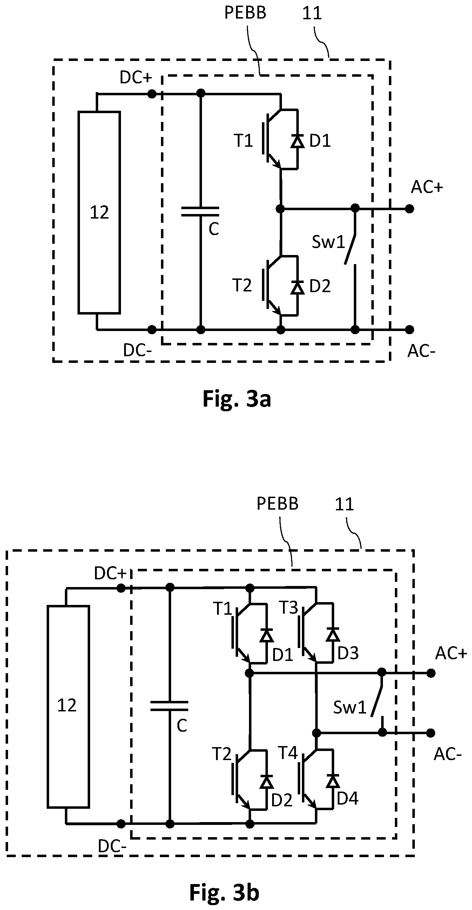

Fig. 2 illustrates a schematic view of a cell 21 of the power supporting system 1 according to one embodiment. The cell 21 comprises an energy storage unit 22 and a control circuit arranged to control isolation and/or discharge and/or bypassing of said energy storage unit 22. The control circuit may comprise a first switch S1 for bypassing said energy storage unit 22. The control circuit may comprise a second switch S2 for isolating said energy storage unit 22. The control circuit may comprise a third switch S3 arranged in series with a first resistor R1 and/or a first fuse F1 for discharging said energy storage unit 22. Fig. 2 illustrates an example wherein said third switch S3 is arranged in series with both said first resistor R1 and said first fuse F1. As a non-limiting example, said ESS 22 comprises one or more cells as the cells 22 now detailed. However, said ESS may incorporate other types of cells, such as cells described below with reference to Figs. 3a-3b.

Figs. 3a-3b respectively illustrate a schematic view of a cell 11 of the power supporting system 1.

As a first example, as illustrated in Fig. 3a, the cell 11 comprises a power electronics building block PEBB and an energy storage unit 12. The power electronics building block PEBB includes two power electronic units arranged in half-bridge configuration, so that a first DC side terminal DC+ and a second DC side terminal DC-are electrically connectable to said energy storage unit 12 and wherein a first AC side terminal AC+ and a second AC side terminal AC- enabling the cell to be electrically connected in said string. An auxiliary bypass switch Sw1 may be provided between the first AC side terminal AC+ and the second AC side terminal AC- so as to enable bypassing of the cell 11. The present disclosure is not limited to any particular power electronic unit. A first power electronic unit may comprise a first transistor T1 and a second power electronic unit may comprise a second transistor T2. A first diode D1 may be electrically connected in parallel with the first transistor T1. A second diode D2 may be electrically connected in parallel with the second transistor T2.

As a second example, as illustrated in Fig. 3b, the cell 11 comprises a power electronics building block PEBB and an energy storage unit 12. The power electronics building block PEBB includes four power electronic units arranged in full-bridge configuration. A first power electronic unit may comprise a first transistor T1 and a second power electronic unit may comprise a second transistor T2. A third power electronic unit may comprise a third transistor T3. A fourth power electronic unit may comprise a fourth transistor T4. A first diode D1 may be electrically connected in parallel with the first transistor T1. A second diode D2 may be electrically connected in parallel with the second transistor T2. A third diode D3 may be electrically connected in parallel with the third transistor T3. A fourth diode D4 may be electrically connected in parallel with the fourth transistor T4. One or more or each diode may be connected in anti-parallel with the respective transistor. Further, the power electronics building block PEBB may include an energy storage unit C at least electrically connectable between a first DC side terminal and a second DC side terminal of the power electronics building block.

The switches of the cells of the VSC and/or the ESS may be any suitable switch. As a non-limiting example, at least one switch of any of said cells 21 of the ESS is a semiconductor switch, wherein optionally said semiconductor switch is one of an IGBT, a MOSFET, or an Integrated Gate-Commutated Thyristor. As a non-limiting example, at least one switch of any of said cells 11 of the VSC 10 is a semiconductor switch, wherein optionally said semiconductor switch is one of an IGBT, a MOSFET, or an Integrated Gate-Commutated Thyristor.

As a non-limiting example, said VSC 10 comprises one or more cells as the cells 11 described with reference to Figs. 3a-3b. However, said VSC 10 may incorporate other types of cells, such as cells described with reference to Fig. 2.

Fig. 4 illustrates a flow chart of a method of controlling a power supporting system 1, such as the one described with reference to Fig. 1, according to one embodiment. The power supporting system 1 is controllable to a first power supporting mode S8 in which said power supporting system 1 is capable of providing active power support and reactive power support. The active power support is provided by means of an energy storage system (ESS) 20 having been charged to an energized state. The reactive power support is provided by means of a voltage source converter (VSC) 10. The power supporting system 1 is controllable to a second power supporting mode S5 in which said power supporting system 1 is capable of providing reactive power support by means of said VSC 10. In the second power supporting mode S5, said ESS 10 is in a de-energized state. The method comprises a step of determining if said power supporting system 1 is operating with normal switching behavior or with emergent switching behavior. The method comprises a step of, during normal switching behavior, controlling the power supporting system 1 so that, when switching mode from said first power supporting mode S8 to said second power supporting mode S5, said ESS 20 is discharged by means of operating at least one switch of the VSC 10. The method comprises a step of, in response to a detection of emergent switching behavior, controlling the power supporting system 1 so that, when switching mode from said first power supporting mode S8 to said second power supporting mode S5, said ESS 20 is discharged by means of a protection circuit 40 configured to consume energy of the ESS 20.

As a non-limiting example, the power supporting system 1 is controllable between a plurality of operational modes, wherein said first power supporting mode S8 and said second power supporting mode S5 are included in said plurality of operational modes. Said plurality of operational modes further includes one or more of the following: a power neutral mode S3 in which the power supporting system 1 does not provide active power support nor reactive power support and in which the ESS 20 is in a de-energized state, and in which said at least one switch of the VSC 10 is initialized; a charging mode S6.1 in which the ESS 20 is being charged to an energized state; an active discharging mode S6.2 in which the ESS 20 is being discharged to said de-energized state by means of said VSC 10. Accordingly, the method comprises, during normal switching behavior, controlling the power supporting system 1 according to a normal operation sequence. Said normal operation sequence includes one or more of the following: switching S3P2 from said neutral mode S3 to said charging mode S6.1; switching S6P1 from said charging mode S6.1 to said first power supporting mode S8; switching S8P1 from said first power supporting mode S8 to said active discharging mode S6.2; switching S6P6 from said active discharging mode S6.2 to said neutral mode S3; switching S3P3 from said neutral mode S3 to said second power supporting mode S5; switching S5P3 from said second power supporting mode S5 to said neutral mode S3.

As a non-limiting example, said plurality of operational modes further includes: a third power supporting mode S7 in which the power supporting system 1 is capable of providing reactive power support and in which the ESS 20 is being discharged to said de-energized state by means of said protection circuit 40. Said normal operation sequence further includes: switching S7P1 from said third power supporting mode S7 to said second power supporting mode S5.

The method may according to a non-limiting example comprise: in response to an emergent switching behavior, controlling the power supporting system 1 according to an emergent operation sequence. Said emergent operation sequence at least includes one or more of the following: switching S6P5 from said active discharging mode S6.2 to said third power supporting mode S7; switching S6P3 from said charging mode S6.1 to said third power supporting mode S7; switching S8P2 from said first power supporting mode S8 to said third power supporting mode S7.

Further, as a non-limiting example, the plurality of operational modes further includes: a first disconnected mode S4.2 in which the power supporting system 1 is disconnected from the power transmission or distribution system and the ESS 20 is in said de-energized state, a connected mode S2.1 in which the power supporting system 1 is connected to the power transmission or distribution system, wherein said normal operation sequence further includes one or more of the following: switching S5P1 from said second power supporting mode S5 to said first disconnected mode S4.2, switching S4P2 from said first disconnected mode S4.2 to said connected mode S2.1, and switching S2P5 from said connected mode S2.1 to said second power supporting mode S5.

In addition, said emergent operation sequence may further include: switching S5P2 from said second power supporting mode S5 to said first disconnected mode S4.2.

As a non-limiting example, the plurality of operational modes further includes: a maintenance mode S1 in which the power supporting system 1 is at least partially shut-down so as to promote safe maintenance. Accordingly, the normal operation sequence further includes: switching S1P1 from said maintenance mode S1 to said connected mode S2.1; switching S2P6 from said connected mode S2.1 to said maintenance mode S1.

Further, as yet one more non-limiting example, the plurality of operational modes further includes: an initialization mode S2.2 in which the ESS 20 is initialized (i.e., the ESS is activated to start charging/discharging any cells of the ESS 20). Accordingly, the normal operation sequence further includes: switching S2P2 from said connected mode S2.1 to said initialization mode S2.2; switching S2P1 from said initialization mode S2.2 to said connected mode S2.1; switching S2P4 from said initialization mode S2.2 to said neutral mode S3; switching S3P1 from said neutral mode S3 to said initialization mode S2.2; switching S2P3 from said initialization mode S2.2 to said second power supporting mode S5.

Moreover, as a further non-limiting example, the plurality of operational modes further includes: a second disconnected mode S4.1 in which the power supporting system 1 is disconnected from the power transmission or distribution system and in which the ESS 20 is being discharged to said de-energized state by means of said protection circuit 40. Accordingly, the normal operation sequence includes: switching S7P2 from said third power supporting mode S7 to said second disconnected mode S4.1; switching S4P1 from said second disconnected mode S4.1 to said first disconnected mode S4.2.

In addition, as a further non-limiting example, said emergent operation sequence includes one or more of: switching S7P3 from said third power supporting mode S7 to said second disconnected mode S4.1; switching S6P4 from said active discharging mode S6.2 to said second disconnected mode S4.1; switching S6P2 from said charging mode S6.1 to said second disconnected mode S4.1; switching S8P3 from said first power supporting mode S8 to said second disconnected mode S4.1.

Said method may be performed by means of a control device 30 configured to perform one or more of the above described steps of said method. The control device may comprise monitoring means for monitoring one or more aspects of the VSC 10 and/or the ESS 20, or any component thereof, such as switches, capacitors, or energy storage units. The monitoring means may be configured to monitor active power support and/or reactive power support provided by the VSC and the ESS, and/or how much said active power support and/or reactive power support deviates from a desired active/reactive power support. The control device may comprise a processing device for processing input from monitoring means and/or a user and/or other forms of input and provide instructions for how to control operation of the VSC 10, the ESS 20, or the power supporting system 1 to provide active and/or reactive power support. The control device may comprise a control signal generating means for generating a signal based on said instructions to control one or more components of the power supporting system or any sub-system thereof.

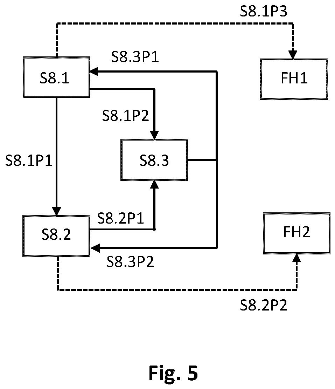

Fig. 5 illustrates a flow chart of a part of a method of controlling a power supporting system according to one embodiment. The power supporting system 1 may in various non-limiting examples be designed with various levels of redundancy, for instance increasing the number of cells in one or more arms of the VSC and/or strings of the ESS than what is required for a nominal operation range. When the redundancy of the power supporting system 1 is not consumed and the power transmission or distribution system is not in an over-voltage situation, the power supporting system remains in a full rated operation mode S8.1. However, when there is temporary over-voltage, the power supporting system blocks one or more switches and stay in a temporary blocked mode S8.3, i.e., the power supporting system switches S8.1 P2 from full-rated operation mode S8.1 to said temporary blocked mode S8.3. However, when the redundancy is consumed, i.e., one or more cells of the units being bypassed, the system works in derated mode S8.2, i.e., the power supporting system switches S8.1 P1 from said full rated operation mode S8.1 to said derated operation mode S8.2. Alternatively, if the power supporting system is in the temporary blocked mode S8.3, the power supporting system 1 switches S8.2P1 from said temporary blocked mode S8.3 to said derated mode S8.2. The power supporting system 1 may switch S8.3P1 from said temporary blocked mode S8.3 to said full rated operation mode S8.1 when said over-voltage situation has passed. The power supporting system 1 may switch S8.2P1 from said derated mode S8.2 to said temporary blocked mode S8.3 when redundancy is no longer consumed. In addition, the power supporting system 1 may be operated into a first fault handling mode FH1 by switching S8.1P3 the power supporting system 1 from said full rated operation mode S8.1 to said first fault handling mode FH1. In addition, the power supporting system 1 may be operated into a second fault handling mode FH2 by switching S8.2P2 the power supporting system 1 from said derated operation mode S8.2 to said second fault handling mode FH1. The first and second fault handling modes FH1, FH2 handle faults differently depending on whether the power supporting system 1 preceding said fault operates at full rated operation power (when redundancy is available) or operates at derated operation power (when redundancy is consumed). For instance, in the first fault handling mode FH1, the power supporting system 1 may bypass one or more faulty cells of the VSC and/or the ESS and replace the bypassed one or more faulty cells of the VSC and/or the ESS with another one or more healthy cells. For instance, in the second fault handling mode FH2, the power supporting system 2 may bypass one or more faulty cells of the VSC and/or the ESS and in addition bypass one or more healthy cells of the VSC and/or the ESS so as to maintain voltage balance.

While the foregoing is directed to some embodiments, other and further embodiments may be devised without parting from the inventive concept discussed herein. The scope of the invention is however determined by the claims.

## Claims

1. Method of controlling a power supporting system (1) for a power transmission or distribution system, said power supporting system (1) being controllable to:
- a first power supporting mode (S8) in which said power supporting system (1) is capable of providing active power support and reactive power support, said active power support being provided by means of an energy storage system (20), ESS, having been charged to an energized state, and said reactive power support being provided by means of a voltage source converter (10), VSC, and
- a second power supporting mode (S5) in which said power supporting system (1) is capable of providing reactive power support by means of said VSC (10), and in which said ESS (10) is in a de-energized state,
the method comprising:
- determining if said power supporting system (1) is operating with normal switching behavior or with emergent switching behavior;
- during normal switching behavior, controlling the power supporting system (1) so that, when switching mode from said first power supporting mode (S8) to said second power supporting mode (S5), said ESS (20) is discharged by means of operating at least one switch of the VSC (10), and
- in response to a detection of emergent switching behavior, controlling the power supporting system (1) so that, when switching mode from said first power supporting mode (S8) to said second power supporting mode (S5), said ESS (20) is discharged by means of a protection circuit (40) configured to consume energy of the ESS (20).

2. Method according to claim 1, wherein said power supporting system (1) is controllable between a plurality of operational modes, wherein said first power supporting mode (S8) and said second power supporting mode (S5) are included in said plurality of operational modes, said plurality of operational modes further including one or more of the following:
- a power neutral mode (S3) in which the power supporting system (1) does not provide active power support nor reactive power support and in which the ESS (20) is in a de-energized state, and in which said at least one switch of the VSC (10) is initialized;
- a charging mode (S6.1) in which the ESS (20) is being charged to an energized state;
- an active discharging mode (S6.2) in which the ESS (20) is being discharged to said de-energized state by means of said VSC (10), the method comprising:
- during normal switching behavior, controlling the power supporting system (1) according to a normal operation sequence,
wherein said normal operation sequence includes one or more of the following:
- (S3P2) switching from said neutral mode (S3) to said charging mode (S6.1);
- (S6P1) switching from said charging mode (S6.1) to said first power supporting mode (S8);
- (S8P1) switching from said first power supporting mode (S8) to said active discharging mode (S6.2);
- (S6P6) switching from said active discharging mode (S6.2) to said neutral mode (S3);
- (S3P3) switching from said neutral mode (S3) to said second power supporting mode (S5);
- (S5P3) switching from said second power supporting mode (S5) to said neutral mode (S3).

3. Method according to claim 2, wherein said plurality of operational modes further includes:
- a third power supporting mode (S7) in which the power supporting system (1) is capable of providing reactive power support and in which the ESS (20) is being discharged to said de-energized state by means of said protection circuit (40),
wherein said normal operation sequence further includes:
- (S7P1) switching from said third power supporting mode (S7) to said second power supporting mode (S5).

4. Method according to claim 3, further comprising:
- in response to an emergent switching behavior, controlling the power supporting system (1) according to an emergent operation sequence,
wherein said emergent operation sequence at least includes one or more of the following:
- (S6P5) switching from said active discharging mode (S6.2) to said third power supporting mode (S7);
- (S6P3) switching from said charging mode (S6.1) to said third power supporting mode (S7);
- (S8P2) switching from said first power supporting mode (S8) to said third power supporting mode (S7).

5. The method according to any one of claims 2-4, wherein the plurality of operational modes further includes:
- a first disconnected mode (S4.2) in which the power supporting system (1) is disconnected from the power transmission or distribution system and the ESS (20) is in said de-energized state,
- a connected mode (S2.1) in which the power supporting system (1) is connected to the power transmission or distribution system,
wherein said normal operation sequence further includes:
- (S5P1) switching from said second power supporting mode (S5) to said first disconnected mode (S4.2),
- (S4P2) switching from said first disconnected mode (S4.2) to said connected mode (S2.1),
- (S2P5) switching from said connected mode (S2.1) to said second power supporting mode (S5).

6. The method according to claim 4 and 5, wherein said emergent operation sequence further includes:
- (S5P2) switching from said second power supporting mode (S5) to said first disconnected mode (S4.2).

7. The method according to any one claims 5-6, wherein the plurality of operational modes further includes:
- a maintenance mode (S1) in which the power supporting system (1) is at least partially shut-down so as to promote safe maintenance;
wherein the normal operation sequence further includes:
- (S1 P1) switching from said maintenance mode (S1) to said connected mode (S2.1);
- (S2P6) switching from said connected mode (S2.1) to said maintenance mode (S1).

8. The method according to any one of claims 5-7, wherein the plurality of operational modes further includes:
- an initialization mode (S2.2) in which the ESS (20) is initialized,
wherein the normal operation sequence further includes:
- (S2P2) switching from said connected mode (S2.1) to said initialization mode (S2.2);
- (S2P1) switching from said initialization mode (S2.2) to said connected mode (S2.1);
- (S2P4) switching from said initialization mode (S2.2) to said neutral mode (S3);
- (S3P1) switching from said neutral mode (S3) to said initialization mode (S2.2);
- (S2P3) switching from said initialization mode (S2.2) to said second power supporting mode (S5).

9. The method according to any of claims 5-8, wherein the plurality of operational modes further includes:
- a second disconnected mode (S4.1) in which the power supporting system (1) is disconnected from the power transmission or distribution system and in which the ESS (20) is being discharged to said de-energized state by means of said protection circuit (40),
wherein the normal operation sequence includes:
- (S7P2) switching from said third power supporting mode (S7) to said second disconnected mode (S4.1);
- (S4P1) switching from said second disconnected mode (S4.1) to said first disconnected mode (S4.2).

10. The method according to claim 9, wherein said emergent operation sequence includes one or more of:
- (S7P3) switching from said third power supporting mode (S7) to said second disconnected mode (S4.1);
- (S6P4) switching from said active discharging mode (S6.2) to said second disconnected mode (S4.1);
- (S6P2) switching from said charging mode (S6.1) to said second disconnected mode (S4.1);
- (S8P3) switching from said first power supporting mode (S8) to said second disconnected mode (S4.1).

11. Control device (30) configured to perform the method according to any one of claims 1-10.

12. A power supporting system (1) for a power transmission or distribution system, configured to be controllable to:
- a first power supporting mode (S8) in which said power supporting system is capable of providing active power support and reactive power support, said active power support being provided by means of an energy storage system (20), ESS, having been charged to an energized state, and said reactive power support being provided by means of a voltage source converter (10), VSC, and
- a second power supporting mode (S5) in which said power supporting system is capable of providing reactive power support by means of said VSC (10), and in which said ESS (20) is in a de-energized state,
wherein
- the power supporting system (1) is configured to operate with normal switching behavior or with emergent switching behavior,
- the power supporting system (1) is configured to, during normal switching behavior, when switching mode from said first power supporting mode to said second power supporting mode, discharge said ESS (20) by means of operating at least one switch of the VSC (10), and,
- in response to a detection of emergent switching behavior, when switching mode from said first power supporting mode (S8) to said second power supporting mode (S5), discharge said ESS (20) by means of a protection circuit (40) configured to consume energy of the ESS (20).

13. The power supporting system (1) according to claim 12, wherein at least one switch of said at least one switch of the VSC (10) is a semiconductor switch, wherein optionally said semiconductor switch is one of an IGBT, a MOSFET, or an Integrated Gate-Commutated Thyristor.

14. The power supporting system (1) according to any one of claims 12-13, wherein the protection circuit (40) comprises at least one resistor.

15. The power supporting system (1) according to any one of claims 12-14, comprising a control device (30) according to claim 11.
